# EUROPEAN PATENT APPLICATION

(11) **EP 4 068 278 A2**
(43) Date of publication of application: **05.10.2022**
(21) Application number: 22191233.0
(22) Date of filing: 19.08.2022
(51) Int. Cl.: G10L 15/04, G10L 25/87

(54) **METHOD AND APPARATUS FOR VOICE RECOGNITION, ELECTRONIC DEVICE AND STORAGE MEDIUM**

(30) Priority: 23.08.2021 CN 202110970317
(71) Applicant: Apollo Intelligent Connectivity (Beijing) Technology Co., Ltd., Beijing 100176 (CN)
(72) Inventor: PENG, Jingwei, Beijing, 100176 (CN); CHEN, Zhen, Beijing, 100176 (CN)
(74) Representative: Studio Torta S.p.A.

(57) **Abstract**

Disclosed are a method and an apparatus for voice recognition, an electronic device and a storage medium, which relate to a field of artificial intelligence technologies such as voice recognition, end-point detection (EPD) and natural language processing (NLP). The method includes: performing voice recognition on voice information; and updating a waiting duration for EPD from a first preset duration to a second preset duration in response to recognizing a preset keyword from the voice information, where the first preset duration is less than the second preset duration. Therefore, the invention avoids recognizing an end point caused by a pause after the user speaks the preset keyword and avoids a break due to recognizing an end point in the voice recognition process, which is conductive to prolonging voice recognition time and improving the user experience.

## Description

### TECHNICAL FIELD

The invention relates to a field of computer technologies, and particularly to a method and an apparatus for voice recognition, an electronic device, a storage medium and a computer program product.

### BACKGROUND

At present, with the development of technologies such as artificial intelligence and natural language processing, voice recognition technology is widely applied in the fields of intelligent household appliances, robot voice interaction, in-vehicle (vehicle-mounted) voice and the like. For example, in an in-vehicle voice scene, an in-vehicle voice assistant may perform voice recognition on the speaking content of a driver or a passenger on a vehicle, and acquire a user intention based on the voice recognition content and automatically perform a corresponding instruction without needing manual operations of the user, with a fast response speed, and being beneficial to driving safety.

### SUMMARY

The invention provides a method and an apparatus for voice recognition, an electronic device, a storage medium and a computer program product.

According to one aspect of the invention, a method for voice recognition is performed by an electronic device. The method includes: performing voice recognition on voice information; and updating a waiting duration for end-point detection (EPD) from a first preset duration to a second preset duration in response to recognizing a preset keyword from the voice information, where the first preset duration is less than the second preset duration.

Alternatively, after updating the waiting duration for EPD from the first preset duration to the second preset duration, the method further includes: generating an EPD result by continuing EPD on the voice information based on the updated waiting duration for EPD.

Alternatively, generating the EPD result by continuing EPD on the voice information based on the updated waiting duration for EPD includes: acquiring a mute duration in the voice information starting from an initial moment of performing EPD; determining the generated EPD result is that an end point is not recognized, in response to recognizing that the mute duration is less than the updated waiting duration for EPD, and the voice information comprises a human voice; determining the generated EPD result is that the end point is recognized, in response to recognizing that the mute duration reaches the updated waiting duration for EPD.

Alternatively, the method further includes: updating the initial moment of performing EPD based on the moment of recognizing the preset keyword from the voice information.

Alternatively, updating the initial moment of performing EPD based on the moment of recognizing the preset keyword from the voice information includes: determining a moment of recognizing a last recognition unit of the preset keyword from the voice information as the initial moment of performing EPD.

Alternatively, the method further includes: controlling to continue voice recognition on the voice information in response to the EPD result being that the end point is not recognized; and controlling to stop voice recognition on the voice information in response to the EPD result being that the end point is recognized.

Alternatively, the method further includes: updating the waiting duration for EPD from the second preset duration to the first preset duration in response to the EPD result being that the end point is recognized.

According to another aspect of the invention, an apparatus for voice recognition is provided, and includes: a recognition module, configured to perform voice recognition on voice information; and an update module, configured to update a waiting duration for end-point detection (EPD) from a first preset duration to a second preset duration in response to recognizing a preset keyword from the voice information, the first preset duration is less than the second preset duration.

Alternatively, the apparatus further includes a detection module, configured to: generate an EPD result by continuing EPD on the voice information based on the waiting duration for EPD.

Alternatively, the detection module is further configured to: acquire a mute duration in the voice information starting from an initial moment of EPD; determine the generated EPD result is that an end point is not recognized, in response to recognizing that the mute duration is less than the waiting duration for EPD, and the voice information comprises human voice; and determine the generated EPD result is that the end point is recognized, in response to recognizing that the mute duration reaches the waiting duration for EPD.

Alternatively, the update module is further configured to: update the initial moment of performing EPD based on the moment of recognizing the preset keyword from the voice information.

Alternatively, the update module is further configured to: determine a moment of recognizing a last recognition unit of the preset keyword from the voice information as the initial moment of performing EPD.

Alternatively, the apparatus further includes a control module, configured to: continue voice recognition on the voice information in response to the EPD result being that the end point is not recognized; and stop voice recognition on the voice information in response to the EPD result being that the end point is recognized.

Alternatively, the update module is further configured to: update the waiting duration for EPD from the second preset duration to the first preset duration in response to the EPD result being that the end point is recognized.

According to another aspect of the invention, an electronic device is provided, and includes: at least one processor; and a memory communicatively connected to the at least one processor. The memory is stored with instructions executable by the at least one processor. When the instructions are performed by the at least one processor, the at least one processor is caused to perform the method for voice recognition.

According to another aspect of the invention, a non-transitory computer readable storage medium stored with computer instructions is provided. When the computer instructions are executed by a computer, the computer is caused to perform the method for voice recognition.

According to another aspect of the invention, a computer program product including a computer program is provided. When the computer program is performed by a processor, the steps of the method for voice recognition are implemented.

It should be understood that, the content described in the part is not intended to identify key or important features of embodiments of the invention, nor intended to limit the scope of the invention. Other features of the invention will be easy to understand through the following specification.

### BRIEF DESCRIPTION OF THE DRAWINGS

The drawings are intended to better understand the solution, and do not constitute a limitation to the invention.
FIG. 1 is a flowchart of a method for voice recognition according to a first embodiment of the invention.
FIG. 2 is a flowchart of a method for voice recognition according to a second embodiment of the invention.
FIG. 3 is a flowchart of a method for voice recognition according to a third embodiment of the invention.
FIG. 4 is a block diagram of an apparatus for voice recognition according to a first embodiment of the invention.
FIG. 5 is a block diagram of an electronic device configured to implement a method for voice recognition in the embodiment of the invention.

### DETAILED DESCRIPTION

Embodiments of the present invention are described as below with reference to the accompanying drawings, which include various details of embodiments of the present invention to facilitate understanding, and should be considered as merely exemplary. Similarly, for clarity and conciseness, descriptions of well-known functions and structures are omitted in the following descriptions.

Artificial Intelligence (AI) is a new science of technology that studies and develops theories, methods, technologies and application systems configured to simulate, extend and expand human intelligence. At present, AI technology is characterized by high automation, high accuracy and low cost, which is widely applied.

Voice Recognition is a technology that allows a machine to convert a voice signal into a corresponding text or a command through recognition and understanding process, which mainly includes feature extraction technology, pattern matching criteria and model training technology.

Natural Language Processing (NLP) is a computer system that may effectively achieve natural language communication, and especially a science of software system, is an important direction in the field of computer science and artificial intelligence.

End-point detection (EPD) is a technology for recognizing a voice end point, that is, may recognize whether a user has finished the speaking, and is an important direction of voice activity detection (VAD) technology, mainly including three aspects of audio framing, feature extraction, and classification recognition.

However, a voice recognition process in the related art is easily broken by the EPD technology, and the obtained voice recognition result is incomplete, which affects the user experience.

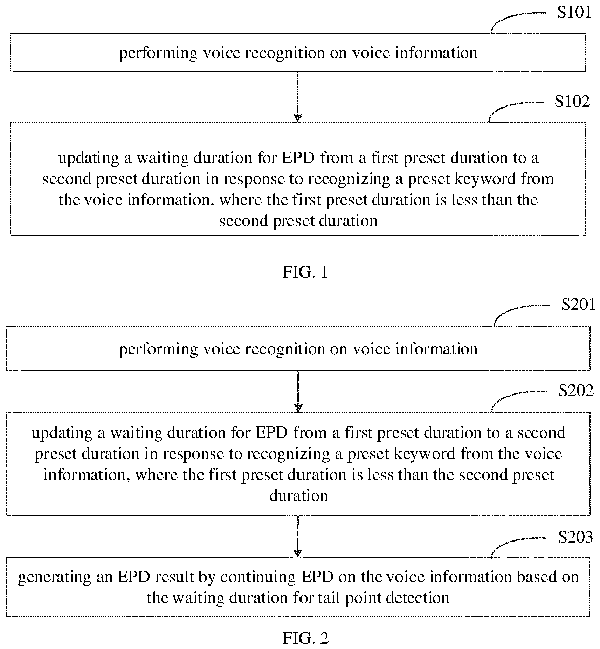

FIG. 1 is a flowchart of a method for voice recognition according to a first embodiment of the invention.

As illustrated in FIG. 1, a method for voice recognition according to a first embodiment of the invention includes the steps at S101-S102.

At S101, voice recognition is performed on voice information.

It needs to be noted that, an executive subject of the method for voice recognition in the embodiment of the invention may be a hardware device with a capacity of processing data information and/or a software necessary to drive the operation of the hardware device. Optionally, an executive subject may include a workstation, a server, a computer, a user terminal and other smart devices. The user terminal includes but not limited to a mobile phone, a computer, a smart voice interaction device, a smart appliance, a vehicle-mounted terminal, etc.

In the embodiment of the invention, voice recognition may be performed on voice information in an offline and/or online mode, which is not limited here.

In an implementation, an apparatus for voice recognition may be preconfigured on the smart device to perform voice recognition on the voice information, that is, offline voice recognition may be thus achieved. The apparatus for voice recognition may include a voice recognition model.

In an implementation, the smart device may establish a network connection with a server, and send the voice information to the server, the apparatus for voice recognition in the server may perform voice recognition on the voice information, and the server may send a voice recognition result to the smart device, that is, online voice recognition may be thus achieved. The server may include a cloud server.

It should be noted that, in the embodiment of the invention, the method for collecting voice information is not limited here. For example, an apparatus for voice collection may be mounted on the smart device or around the smart device, and may acquire voice information. The apparatus for voice collection may include a microphone.

At S 102, a waiting duration for EPD is updated from a first preset duration to a second preset duration in response to recognizing a preset keyword from the voice information, where the first preset duration is less than the second preset duration.

In the embodiment of the invention, EPD may be further performed on the voice information in the process of performing voice recognition on the voice information. The EPD result may be configured to determine whether to continue voice recognition on the voice information. For example, when the EPD result is that the end point is not recognized, indicating that a speaking process of a user has not ended, voice recognition on the voice information is continued. When the EPD result is that the end point is recognized, indicating that the speaking process of the user has ended, voice recognition on the voice information is stopped.

It should be noted that, in the embodiment of the invention, the waiting duration for EPD refers to a critical value of determining whether the end point is recognized in EPD. For example, when a mute duration in the voice information is less than the waiting duration for EPD, the mute duration is relatively short, and the speaking process of the user has not ended, the EPD result is that the end point is not recognized. On the contrary, when the mute duration reaches/is not less than the waiting duration for EPD, the mute duration is too long, and the speaking process of the user has ended, the EPD result is that the end point is recognized.

In the embodiment of the invention, the waiting duration for EPD may be updated from a first preset duration to a second preset duration in response to recognizing a preset keyword from the voice information, where the first preset duration is less than the second preset duration. That is, the waiting duration for EPD may be prolonged in response to recognizing the preset keyword from voice information.

The preset keyword may be configured according to actual situation, which is not limited here. For example, the preset keyword includes but not limited to "navigating to", "calling to", "increasing the temperature to".

The first preset duration and the second preset duration may be set according to actual situation, which is not limited here. For example, the first preset duration and the second preset duration are respectively set to 200ms and 5s.

For example, when the voice recognition result of voice information is "navigating to", the EPD duration may be updated from 200ms to 5s in response to recognizing a preset keyword from voice information.

In summary, in the method for voice recognition according to the embodiment of the invention, the waiting duration for EPD may be updated from the first preset duration to the second preset duration in response to recognizing the preset keyword from the voice information, where the first preset duration is less than the second preset duration. Therefore, the waiting duration for EPD may be prolonged in response to recognizing the preset keyword from voice information, so as to avoid recognizing an end point caused by a pause after the user speaks the preset keyword and avoid a break due to recognizing an end point in the voice recognition process, which is conductive to prolonging voice recognition time and improving the user experience.

FIG. 2 is a flowchart of a method for voice recognition according to a second embodiment of the invention.

As illustrated in FIG. 2, a method for voice recognition according to a second embodiment of the invention includes the steps at S201-S203.

At S201, voice recognition is performed on voice information.

At S202, a waiting duration for EPD is updated from a first preset duration to a second preset duration in response to recognizing a preset keyword from the voice information, where the first preset duration is less than the second preset duration.

The relevant content of steps at S201-S202 may refer to the above embodiment, which is not repeated here.

At S203, an EPD result is generated by continuing EPD on the voice information based on the waiting duration for EPD.

In the embodiment of the invention, after the waiting duration for EPD is updated from the first preset duration to the second preset duration, the waiting duration for EPD is the second preset duration, and the EPD on the voice information may be continued based on the waiting duration for EPD to generate an EPD result.

In an implementation, EPD may be performed on the voice information based on a preset EPD strategy in the process of performing voice recognition on the voice information. The EPD strategy may include setting a value of the waiting duration for EPD. Further, continuing EPD on the voice information based on the waiting duration for EPD, may include updating the preset EPD strategy based on the waiting duration for EPD, and continuing EPD on the voice information based on the updated EPD strategy.

In an implementation, generating an EPD result by continuing EPD on the voice information based on the waiting duration for EPD, may include acquiring a mute duration in the voice information starting from an initial moment of EPD, and determining the generated EPD result is that an end point is not recognized, in response to recognizing that the mute duration is less than the waiting duration for EPD, and the voice information includes human voice, which indicates that the mute duration is relatively short, the voice information includes the human voice, the speaking process of the user has not ended. Alternatively, the EPD result is that an end point is recognized in response to the mute duration reaching the waiting duration for EPD, which indicates that the mute duration is too long, and the speaking process of the user has ended. Therefore, the method may comprehensively consider a size relationship between the mute duration and the waiting duration for EPD and whether the voice information includes human voice, to generate an EPD result.

It may be understood that, the initial moment of performing EPD refers to a start moment of performing EPD on voice information. The mute duration in the voice information may be acquired starting from the initial moment of performing EPD. The initial moment of performing EPD may be configured according to actual situations, which is not limited here. For example, the initial moment of performing voice recognition may be determined as the initial moment of performing EPD, for example, the initial moment of performing voice recognition is 10:10:10, and the initial moment of performing EPD may be also set to 10:10:10.

In an implementation, the initial moment of performing EPD may be updated based on a moment of recognizing the preset keyword from the voice information. In this way, the initial moment of performing EPD may be updated in real time based on the moment of recognizing the preset keyword from the voice information, so as to make the initial moment of performing EPD more flexible.

Optionally, a moment of recognizing a last recognition unit of the preset keyword from the voice information may be determined as the initial moment of performing EPD. The recognition unit may be configured according to actual situations, which is not limited here, for example, the recognition unit includes but not limited to a word, a character.

For example, when the voice recognition result of the voice information is "navigating to", and the recognition unit is a character, the recognition moment of "to" may be determined as the initial moment of performing EPD. For example, when the original initial moment of performing EPD is 10:10:10, and the recognition moment of "to" is 10:10:20, the initial moment of performing EPD may be updated from 10:10:10 to 10:10:20.

Further, the mute duration in the voice information may be acquired starting timing from the initial moment 10:10:20 of performing EPD. It may be understood that, when the user speaks "navigating to", there may be a pause due to thinking, environmental interference and other factors, in this case, a mute portion may appear in the voice information, and a mute duration refers to a duration of the mute portion. For example, when the user speaks "navigating to a hotel", there may be a pause for 2s between "to" and "a hotel", the recognition moment of "to" (that is, the initial moment of EPD) is 10:10:20, and the recognition moment of "a hotel" is 10:10:22, in this case, the acquired mute duration in the voice information is 2s starting from the initial moment 10:10:20 of performing EPD to the moment 10:10:22 of recognizing the human voice (that is, the recognition moment of "a hotel"). In the related art, the waiting duration for EPD is relatively short ( generally 200 ms), in this case, when the mute duration reaches 200 ms, an EPD result may be generated, and the EPD result is that an end point is recognized.

In the embodiment of the invention, the waiting duration for EPD may be prolonged, for example, the waiting duration for EPD is prolonged from 200ms to 5s, and the generated EPD result is that an end point is not recognized in response to recognizing that the mute duration is less than the waiting duration for EPD, and the voice information includes human voice, thus avoiding recognizing an end point caused by a pause after the user speaks a preset keyword.

In summary, in the method for voice recognition according to the embodiment of the invention, after the waiting duration for EPD is updated from the first preset duration to the second preset duration, EPD on the voice information may be continued based on the waiting duration for EPD to generate the EPD result. Therefore, the waiting duration for EPD may be prolonged in response to recognizing the preset keyword from voice information, and EPD on the voice information may be continued based on the waiting duration for EPD, to generate a more humanized EPD result, thus avoiding recognizing an end point caused by a pause after the user speaks the preset keyword.

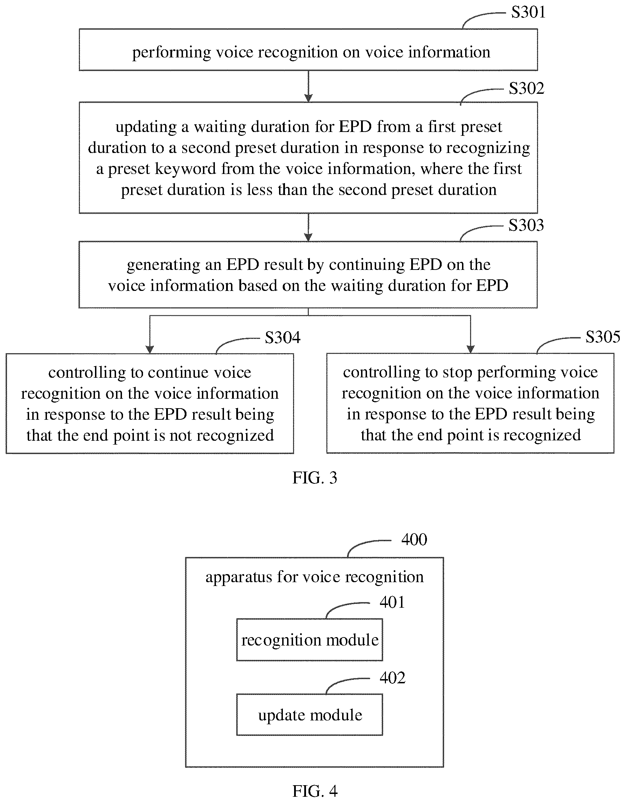

FIG. 3 is a flowchart of a method for voice recognition according to a third embodiment of the invention.

As illustrated in FIG. 3, a method for voice recognition according to a third embodiment of the invention includes:
At S301, voice recognition is performed on voice information.

At S302, a waiting duration for EPD is updated from a first preset duration to a second preset duration in response to recognizing a preset keyword from the voice information, where the first preset duration is less than the second preset duration.

At S303, an EPD result is generated by continuing EPD on the voice information based on the waiting duration for EPD.

The relevant content of steps at S301-S303 may refer to the above embodiment, which is not repeated here.

At S304, voice recognition on the voice information is controlled to be continued in response to the EPD result being that the end point is not recognized.

At S305, voice recognition on the voice information is controlled to be stopped in response to the EPD result being that the end point is recognized.

In the embodiment of the invention, after the EPD result is generated, it may be controlled whether to continue voice recognition on the voice information based on the EPD result.

In an implementation, it may be controlled that voice recognition on the voice information may be continued in response to the EPD result being that the end point is not recognized, indicating that the speaking process of the user has not ended. It is controlled that the voice recognition on the voice information is stopped in response to the EPD result being that the end point is recognized, indicating that the speaking process of the user has ended.

In an implementation, controlling to continue voice recognition on the voice information, may include controlling to continue sending voice information acquired by an apparatus for voice collection to an apparatus for voice recognition, and controlling the apparatus for voice recognition to continue the voice recognition on the voice information.

In an implementation, controlling to stop performing voice recognition on the voice information, may include controlling to stop sending voice information acquired by an apparatus for voice collection to an apparatus for voice recognition, and controlling the apparatus for voice collection to stop the voice recognition on voice information. Therefore, sending the acquired voice information to the apparatus for voice recognition may be stopped in response to recognizing an end point, which may save a transmission bandwidth.

In an implementation, after the EPD result is generated, the waiting duration for EPD may be updated from the second preset duration to the first preset duration further in response to the EPD result being that the end point is recognized, that is, the waiting duration for EPD may be shortened in response to the EPD result being that the end point is not recognized, which is beneficial to improving the sensitivity of EPD, and the EPD on the voice information may be continued based on the waiting duration for EPD to generate the EPD result.

For example, when the user wants to speak "navigating to a hotel", and the voice recognition result of voice information is "navigating to", the waiting duration for EPD may be updated from 200ms to 5s in response to recognizing a preset keyword from voice information. When the EPD on voice information is continued based on the waiting duration 5s for EPD, the generated EPD result is that an end point is not recognized, indicating that the mute duration for voice information is less than 5s, and the voice information includes human voice, then the waiting duration for EPD is updated from 5s to 200ms, and the EPD may be continued on voice information based on the waiting duration 200ms of EPD.

In summary, according to the method for voice recognition in the embodiment of the invention, after the EPD result is generated, it may be controlled that voice recognition on the voice information is continued in response to the EPD result being that the end point is not recognized. Alternatively, it may be controlled that voice recognition on the voice information is stopped in response to the EPD result being that the end point is recognized, which is beneficial to saving computing resources.

FIG. 4 is a block diagram of an apparatus for voice recognition according to a first embodiment of the invention.

As illustrated in FIG. 4, the apparatus 400 for voice recognition in the embodiment of the invention includes a recognition module 401 and an update module 402.

The recognition module 401 is configured to perform voice recognition on voice information; and the update module 402 is configured to update a waiting duration for end-point detection (EPD) from a first preset duration to a second preset duration in response to recognizing a preset keyword from the voice information, where the first preset duration is less than the second preset duration.

In an embodiment of the invention, the apparatus 400 for voice recognition further includes a detection module configured to generate an EPD result by continuing EPD on the voice information based on the waiting duration for EPD.

In an embodiment of the invention, the detection module is further configured to: acquire a mute duration in the voice information starting from an initial moment of performing EPD; and determine the generated EPD result is that an end point is not recognized, in response to recognizing that the mute duration is less than the waiting duration for EPD, and the voice information comprises human voice; or, determine the generated EPD result is that an end point is recognized, in response to recognizing that the mute duration reaches the waiting duration for EPD.

In an embodiment of the invention, the update module 402 is further configured to: update the initial moment of performing EPD based on the moment of recognizing the preset keyword from the voice information.

In an embodiment of the invention, the update module 402 is further configured to: determine a moment of recognizing a last recognition unit of the preset keyword from the voice information as the initial moment of performing EPD.

In an embodiment of the invention, the apparatus 400 for voice recognition further includes a control module. The control module is configured to: control to continue voice recognition on the voice information in response to the EPD result being that the end point is not recognized; or, control to stop voice recognition on the voice information in response to the EPD result being that the end point is recognized.

In an embodiment of the invention, the update module 402 is further configured to: update a waiting duration for EPD from the second preset duration to the first preset duration in response to the EPD result being that the end point is recognized.

In summary, in the apparatus for voice recognition according to the embodiment of the invention, the waiting duration for EPD is updated from the first preset duration to the second preset duration in response to recognizing the preset keyword from the voice information, where the first preset duration is less than the second preset duration. Therefore, the waiting duration for EPD may be prolonged in response to recognizing the preset keyword from voice information, so as to avoid recognizing an end point caused by a pause after the user speaks the preset keyword and avoid a break due to recognizing an end point in the voice recognition process, which is conductive to prolonging voice recognition time and improving the user experience.

Collection, storage, use, processing, transmission, provision and invention of the user personal information involved in the technical solution of the invention comply with relevant laws and regulations, and do not violate public order and good customs.

According to the embodiment of the invention, an electronic device, a readable storage medium and a computer program product are further provided in the invention.

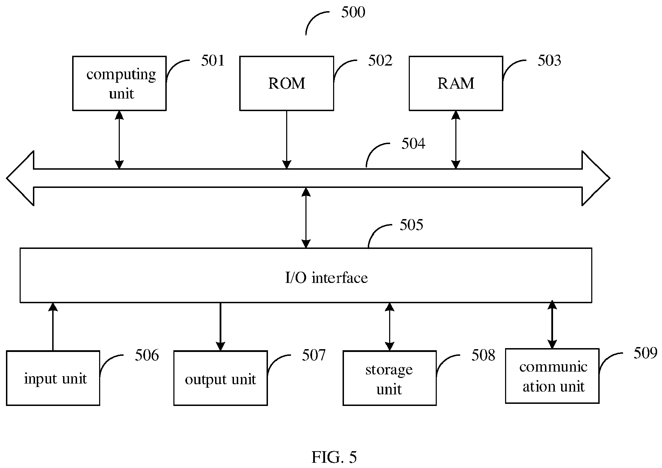

FIG. 5 illustrates a schematic block diagram of an example electronic device 500 configured to implement the embodiment of the invention. The electronic device is intended to represent various types of digital computers, such as laptop computers, desktop computers, workstations, personal digital assistants, servers, blade servers, mainframe computers, and other suitable computers. The electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the invention described and/or required herein.

As illustrated in FIG. 5, a device 500 includes a computing unit 501, configured to execute various appropriate actions and processes according to a computer program stored in a read-only memory (ROM) 502 or loaded from a memory unit 508 to a random access memory (RAM) 503. In the RAM 503, various programs and data required for the device 500 may be stored. The computing unit 501, the ROM 502, and the RAM 503 are connected to each other through a bus 504. An input/output (I/O) interface 505 is also connected to the bus 504.

Several components in the device 500 are connected to the I/O interface 505, and include: an input unit 506, for example, a keyboard, a mouse, etc.; an output unit 507, for example, various types of displays, speakers, etc.; a storage unit 508, for example, a magnetic disk, an optical disk, etc.; and a communication unit 509, for example, a network card, a modem, a wireless communication transceiver, etc. The communication unit 509 allows the device 500 to exchange information/data with other devices over a computer network such as the Internet and/or various telecommunication networks.

The computing unit 501 may be various general and/or dedicated processing components with processing and computing ability. Some examples of a computing unit 501 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 501 performs various methods and processes as described above, for example, a method for voice recognition. For example, in some embodiments, a method for voice recognition may be further achieved as a computer software program, which is physically contained in a machine readable medium, such as the storage unit 508. In some embodiments, a part or all of the computer program may be loaded and/or installed on the device 500 through the ROM 502 and/or the communication unit 509. When the computer program is loaded on the RAM 503 and performed by the computing unit 501, one or more blocks in the above method for voice recognition may be performed. Alternatively, in other embodiments, the computing unit 501 may be configured to perform a method for voice recognition in other appropriate ways (for example, by virtue of a firmware).

Various implementation modes of the systems and technologies described above may be achieved in a digital electronic circuit system, a field programmable gate array (FPGA), an application-specific integrated circuit (ASIC), an application specific standard product (ASSP), a system-on-chip (SOC) system, a complex programmable logic device, a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

The computer code(s) configured to execute a method in the present invention may be written with one or any combination of a plurality of programming languages. The programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be performed completely or partly on the machine, performed partly on the machine as an independent software package and performed partly or completely on the remote machine or server.

In the context of the invention, a machine-readable medium may be a tangible medium that may contain or store a program intended for use in or in conjunction with an instruction execution system, apparatus, or device. The machine readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a speech input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), a blockchain network, and the Internet.

The computer system may include a client and a server. The client and server are generally far away from each other and generally interact with each other through a communication network. The relationship between the client and the server is generated by computer programs running on the corresponding computer and having a client-server relationship with each other. The server may be a cloud server, and further may be a server of a distributed system, or a server in combination with a blockchain.

According to an embodiment of the invention, a computer program product including a computer program is further provided in the invention, the computer program is configured to perform the steps of the method for voice recognition as described in the above embodiment when performed by a processor.

It should be understood that, various forms of procedures shown above may be configured to reorder, add or delete blocks. For example, blocks described in the invention may be executed in parallel, sequentially, or in different orders, as long as the desired result of the technical solution disclosed in the present invention may be achieved, which will not be limited herein.

## Claims

1. A method for voice recognition, performed by an electronic device, comprising:
performing (S101, S201, S301) voice recognition on voice information; and
updating (S102, S202, S302) a waiting duration for end-point detection (EPD) from a first preset duration to a second preset duration in response to recognizing a preset keyword from the voice information, wherein the first preset duration is less than the second preset duration.

2. The method of claim 1, further comprising:
generating (S203, S303) an EPD result by continuing EPD on the voice information based on the updated waiting duration for EPD.

3. The method of claim 2, wherein, generating the EPD result by continuing EPD on the voice information based on the updated waiting duration for EPD, comprises:
acquiring a mute duration in the voice information starting from an initial moment of performing EPD;
determining the generated EPD result is that an end point is not recognized, in response to recognizing that the mute duration is less than the updated waiting duration for EPD, and the voice information comprises a human voice; and
determining the generated EPD result is that the end point is recognized, in response to recognizing that the mute duration reaches the updated waiting duration for EPD.

4. The method of claim 3, further comprising:
updating the initial moment of performing EPD based on the moment of recognizing the preset keyword from the voice information.

5. The method of claim 4, wherein, updating the initial moment of performing EPD based on the moment of recognizing the preset keyword from the voice information, comprises:
determining a moment of recognizing a last recognition unit of the preset keyword from the voice information as the initial moment of performing EPD.

6. The method of any of claims 2 to 5, further comprising:
continuing (S304) voice recognition on the voice information in response to the EPD result being that the end point is not recognized; and
stopping (S305) voice recognition on the voice information in response to the EPD result being that the end point is recognized.

7. The method of any of claims 2 to 5, further comprising:
updating the waiting duration for EPD from the second preset duration to the first preset duration in response to the EPD result being that the end point is recognized.

8. An apparatus (400) for voice recognition, comprising:
a recognition module (401), configured to perform voice recognition on voice information; and
an update module (402), configured to update a waiting duration for tail point detection (EPD) from a first preset duration to a second preset duration in response to recognizing a preset keyword from the voice information, wherein the first preset duration is less than the second preset duration.

9. The apparatus of claim 8, further comprising a detection module, configured to: generate an EPD result by continuing EPD on the voice information based on the waiting duration for EPD.

10. The apparatus of claim 9, wherein the detection module is further configured to:
acquire a mute duration in the voice information starting from an initial moment of EPD;
determine the generated EPD result is that an end point is not recognized, in response to recognizing that the mute duration is less than the updated waiting duration for EPD, and the voice information comprises human voice; and
determine the generated EPD result is that the end point is recognized, in response to recognizing that the mute duration reaches the updated waiting duration for EPD.

11. The apparatus of claim 10, wherein the update module is further configured to:
update the initial moment of performing EPD based on the moment of recognizing the preset keyword from the voice information.

12. The apparatus of claim 11, wherein the update module is further configured to:
determine a moment of recognizing a last recognition unit of the preset keyword from the voice information as the initial moment of performing EPD.

13. The apparatus of any of claims 9 to 12, further comprising a control module, configured to:
continue voice recognition on the voice information in response to the EPD result being that the end point is not recognized; and
stop voice recognition on the voice information in response to the EPD result being that the end point is recognized.

14. The apparatus of any of claims 9 to 12, wherein the update module is further configured to:
update the waiting duration for EPD from the second preset duration to the first preset duration in response to the EPD result being that the end point is recognized.

15. A non-transitory computer readable storage medium stored with computer instructions, wherein when the computer instructions are executed by a computer, the method of any of claims 1 to 7 is carried out.
